# EUROPÄISCHE PATENTSCHRIFT

(11) **EP 3 049 728 B1**
(45) Veröffentlichungstag und Bekanntmachung des Hinweises auf die Patenterteilung: **17.01.2018**
(21) Anmeldenummer: 14806585.7
(22) Anmeldetag: 27.11.2014
(51) Int. Cl.: F24D 11/00, F24D 19/08, F24H 1/18

(54) **DRUCKLOSER WÄRMESPEICHER MIT AUSGLEICHSLEITUNG**
PRESSURELESS HEAT ACCUMULATOR WITH COMPENSATION CONDUIT
ACCUMULATEUR DE CHALEUR SANS PRESSION AVEC CONDUITE D'ÉQUILIBRAGE

(30) Priorität: 04.12.2013 EP 13195629
(43) Veröffentlichungstag der Anmeldung: 03.08.2016
(73) Patentinhaber: Siemens Aktiengesellschaft, 80333 München (DE)
(72) Erfinder: SCHÖTTLER, Michael, 91052 Erlangen (DE); GROBSTICH, Andre, 08237 Steinberg (DE)
(86) Internationale Anmeldenummer: PCT/EP2014/075808
(87) Internationale Veröffentlichungsnummer: WO 2015/082302

(56) Entgegenhaltungen:
- WO-A1-2009/135310
- DE-A1- 2 536 529
- DE-A1- 4 305 867
- DE-U1-202005 009 383
- GB-A- 2 195 172

## Beschreibung

Die Erfindung betrifft ein Verfahren zum Speichern und Bereitstellen von bei der Stromerzeugung anfallender Wärmeenergie mittels eines Fluides.

Durch die stark fluktuierende Einspeisung von regenerativer Energie (Sonne/Wind) in die Stromnetze ergibt sich für die KWK-Kraftwerke (KWK = Kraft-Wärme-Kopplung) das Dilemma, dass sie einerseits entsprechend der Fernwärmeanforderungen thermische Energie und anderseits entsprechend der Netzanforderungen elektrische Energie liefern sollen, wobei es dann z.B. nachts oder am Wochenende unwirtschaftlich werden kann, fossile Brennstoffe zu verfeuern, um Fernwärme zu erzeugen, da der Strompreis dann oft sehr niedrig ist (in Zukunft evtl. sogar immer häufiger negativ). Um die Produktion von thermischer und elektrischer Energie zu entkoppeln, werden daher vermehrt Fernwärmespeicher eingesetzt, vorzugsweise als drucklose Heißwasserschichtenspeicher. Da drucklose Schichtenspeicher nur mit Wassertemperaturen <100°C (betrieblich wird meist auf <95°C begrenzt) beladen werden können und da zwischen Speicher und Fernwärmenetz oft noch Wärmetauscher mit zusätzlicher Grädigkeit zwischengeschaltet sind (da das Fernwärmenetz oft einen wesentlich höheren Betriebsdruck hat als der Pufferspeicher) sinkt die tatsächlich nutzbare Temperatur im Entlade-Modus zum Teil auf unter 85°C. In der Übergangszeit (Frühjahr/Herbst) und vor allem im Winter werden aber die üblichen Fernwärmenetze mit Vorlauftemperaturen deutlich über 95°C (bis zu ca. 135/140°C) betrieben: außer im Sommer bei Fernwärmevorlauftemperaturen kleiner 85-95°C ist es daher mit dem derzeit üblichen Konzept nicht möglich, das Fernwärmenetz nur aus dem Wärmespeicher alleine zu bedienen und das KWK-Kraftwerk bzw. den gefeuerten oder elektrischen Zusatzkessel komplett abzuschalten.

Heißwasserbehälter bzw. -speicher sind beispielsweise bekannt aus der GB 2 195 172 A und der WO 2009/135310 A1 oder der DE 43 05 867 A1, in der ein druckloser Heißwasserspeicher für Fernheizsysteme offenbart ist.

Um Heißwasserschichtenspeicher mit höheren Fernwärmevorlauftemperaturen über 95°C beladen zu können, werden zum Teil Druckbehälter eingesetzt, die aufgrund der druckabhängigen Sättigungstemperaturen mit entsprechend höheren Vorlauftemperaturen beladen und entladen werden können. Der große Nachteil der Druckbehälter ist jedoch ein wesentlich höherer Prüfaufwand bei der Herstellung, sowie wiederkehrende Prüfungen (z.B. Druckprobe mit kaltem Wasser nach 10 Jahren, wiederkehrende Sichtprüfung aller Schweißnähe: dazu müsste die gesamte Isolierung der Tanks entfernt werden). Zusätzlich steigen die Versicherungsprämien für Druckbehälter abhängig vom Druck und vom Volumen extrem an (da das Risiko von den Versicherern als sehr hoch eingeschätzt wird) und damit werden Druckbehälter für große Speichervolumina aus Kostengründen derzeit sehr selten eingesetzt.

Aufgabe der Erfindung ist es, ein Verfahren zum Speichern und Bereitstellen von bei der Stromerzeugung anfallender Wärmeenergie mittels eines Fluides anzugeben.

Zur Durchführung des Verfahrens wird ein Wärmespeicher zum Speichern und Bereitstellen von bei der Stromerzeugung anfallender Wärmeenergie benötigt, umfassend einen Tank für ein Fluid, eine vom Tank abgehende und sich zur Erhöhung des statischen Drucks im Tank über diesen erstreckende Ausgleichsleitung mit einem dem tankseitigen Ende entgegengesetzten offenen Ende zur Herstellung einer Verbindung eines Tankinneren zu Atmosphäre vorsieht, wobei sich die Ausgleichsleitung in den Tank hinein erstreckt.

Die Erfindung nutzt die Tatsache, dass atmosphärisch offene Tanks (egal welche Höhe) nicht als Druckbehälter, sondern als Gebäude bzw. Betriebsmittel gelten, unabhängig vom statischen Druck und von der Betriebstemperatur, da Druck als auf den atmosphärischen Druck bezogenen Überdruck definiert wird. Durch die Ausführung des Wärmespeichers als offenes Bauteil kann sich kein zusätzlicher Überdruck ausbilden.

Bei einer hohen Ausgleichsleitung kann der statische Druck im Wärmespeicher sehr hohe Werte erreichen, die eine "drucklose" Speicherung von Fernwärme-Heißwasser bis über 135°C zulassen.

Durch die Höhe der Ausgleichsleitung wird der Betriebsdruck im heißen Teil des Wärmespeichers festgelegt (welcher meist mit dem heißen Fernwärmevorlauf verbunden ist). Dieser Betriebsdruck im heißen Teil des Wärmespeichers wird so gewählt, dass er oberhalb des Sättigungsdruckes entsprechend der maximal möglichen Fernwärmevorlauftemperatur (z.B. im Winter) zu liegen kommt.

Die Erstreckung der Ausgleichsleitung in den Tank hinein ist wesentlich, da es sonst zu einem Wärmeübergang vom beispielsweise 135°C warmen Wasser im oberen Teil des Tanks an das Wasser in der Ausgleichsleitung käme. Dadurch käme es zum Ausdampfen im oberen Teil der Ausgleichsleitung (Geysir-Effekt), wodurch der statische Druck in der Ausgleichsleitung sinken würde, da die Dichte von Dampfblasen geringer ist als die flüssigen Wassers. Das 135°C heiße Wasser im oberen Teil des Tanks würde auch ausdampfen.

Die Ausgleichsleitung kann sich in den Tank hinein bis in einen unteren Bereich des Tanks erstrecken. Wasser aus dem oberen, heißesten Teil des Tanks oder auch aus einem Mittelteil kann somit nicht in die Ausgleichsleitung gelangen und eine Kühlung der Ausgleichsleitung oder alternativ eine intensive Spülung der Ausgleichsleitung mit vergleichsweise kaltem Wasser ist nicht nötig.

Damit die Wärmeübertragung vom heißen Fluid im oberen Bereich des Tanks auf das kalte Fluid im sich in den Tank erstreckende Teil der Ausgleichsleitung möglichst gering ist, ist der sich in den Tank erstreckende Teil der Ausgleichsleitung zumindest teilweise thermisch isoliert.

Um das aus der Ausgleichsleitung austretende Fluid nicht zu verwerfen, umfasst der Wärmespeicher einen Sammelbehälter für aus der Ausgleichsleitung austretendes Fluid.

Ferner umfasst der Wärmespeicher eine vom Sammelbehälter abzweigende, in einen unteren Bereich des Tanks mündende Leitung, in die eine Pumpe geschaltet ist. So kann das aufgefangene Fluid in den Tank zurückgeführt werden. Durch das permanente Befüllen / Überspeisen der Ausgleichsleitung werden unterschiedliche Lade- / Entlademassenströme sowie thermische Ausdehnvorgänge am Wärmespeicher ausgeglichen.

Zur optimalen Be- und Entladung des Wärmespeichers und entsprechend der Wärmeverteilung im Wärmespeicher weist der Tank einen in einem unteren Bereich angeordneten Anschluss an einen Fernwärmerücklauf und einen in einem oberen Bereich angeordneten Anschluss an einen Fernwärmevorlauf auf.

Das Fluid ist konditioniertes Deionat, da Wasser ein guter, nicht toxischer und gut verfügbarer Wärmeträger ist. Um die Wärme zwischen Wärmespeicher und Fernwärmenetz zu übertragen, ist kein zusätzlicher Wärmetauscher erforderlich, weshalb Komponenten eingespart werden. Weiter entfällt der Exergie-Verlust durch die Grädigkeit am Wärmetauscher beim Laden und Entladen des Wärmespeichers. Außerdem vergrößert sich die nutzbare Wärmekapazität des Wärmespeichers (der Wärmespeicher kann bis zu einer Fernwärmevorlauftemperatur beladen werden) und schließlich kann das Fernwärmenetz immer aus dem Wärmespeicher mit der vorher eingespeicherten Vorlauftemperatur versorgt werden - ohne Nachheizung (mit Wärmetauscher ergibt sich sowohl beim Beladen als auch bei Entladen eine Grädigkeit und die Entladetemperatur ist damit immer um die doppelte Grädigkeit niedriger als die gewünschte Vorlauftemperatur) .

Im erfinderischen Verfahren zum Speichern und Bereitstellen von bei der Stromerzeugung anfallender Wärmeenergie mittels eines Fluids, wobei das Fluid in einem Fernheiznetz verwendet wird und in einem Tank des Wärmespeichers gespeichert wird, kommt ein Betriebsdruck in einem heißesten Teil des Wärmespeichers oberhalb eines Sättigungsdrucks des Fluids entsprechend einer maximal möglichen Fernwärme-Vorlauftemperatur zu liegen, indem das Fluid in einem Tank gespeichert wird, und der statische Druck im Tank durch eine vom Tank abgehende und über diesen sich erstreckende Ausgleichsleitung erhöht wird, wobei die Ausgleichsleitung sich in den Tank hinein erstreckt wobei mit einem dem tankseitigen Ende entgegengesetzten offenen Ende der Ausgleichsleitung eine Verbindung des Tankinneren zu Atmosphäre hergestellt wird und das Fluid, das Wasser ist, unterhalb eines oberen Bereichs des Tanks in die Ausgleichsleitung gelangt.

Dabei ist es zweckmäßig, wenn die Ausgleichsleitung gefüllt gehalten wird, so dass jederzeit ein ausreichend hoher geodätischer Wasserdruck im Tank vorliegt.

Beim Wärmespeicher kann überschüssige Fernwärme mit den üblichen Vorlauftemperaturen von bis zu ca. 135°C (und höher, je nach Wärmespeicherhöhe und Ausführung) eingespeichert und bei Bedarf wieder entnommen und ohne weitere Nachheizung in das Fernwärmenetz zurückgespeist werden. Damit kann in Zeiten niedriger Netzentgelte das KWK-Kraftwerk komplett abgeschaltet und das Fernwärmenetz aus dem Wärmespeicher mit der erforderlichen Vorlauftemperatur bedient werden.

Der Tank des Wärmespeichers kann als druckloser, atmosphärisch offener Tank ausgeführt werden und unterliegt damit nicht der Druckgeräte-Richtlinie. Es sind keine wiederkehrenden Druck- und Sichtprüfungen erforderlich. Die Versicherungsprämien sind gegenüber einem Druckbehälter deutlich niedriger.

Die erforderlichen Speichertank-Volumina können drastisch reduziert werden, da der Wärmespeicher nicht wie bei drucklosen Tanks bisher üblich zwischen ca. 60°C Rücklauftemperatur und maximal 95°C (d.h. mit einem Temperaturunterschied von etwa 35K) beladen und entladen werden können, sondern mit einem Temperaturunterschied von bis zu 75K (z. B. von 60°C bis 135°C).

Die Erfindung wird beispielhaft anhand der Zeichnung näher erläutert. Es zeigt schematisch und nicht maßstäblich:

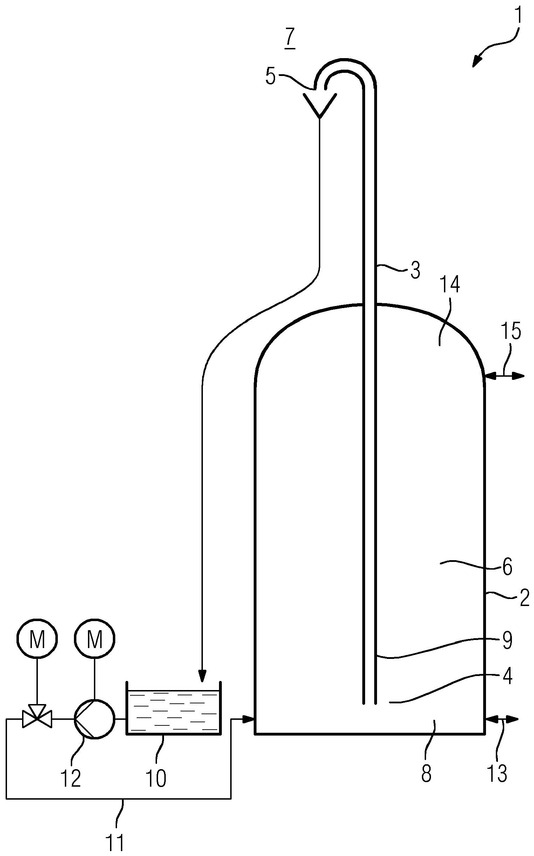

Figur 1 einen Wärmespeicher.

Der Wärmespeicher 1 in der Figur 1 umfasst einen Tank 2 mit einer Höhe von typischerweise zwischen 10 und 50 Metern für ein Fluid, sowie eine vom Tank 2 abgehende und sich zur Erhöhung des statischen Drucks im Tank 2 beispielsweise etwa 25 Meter über diesen erstreckende Ausgleichsleitung 3. Das dem tankseitigen Ende 4 entgegengesetzte Ende 5 der Ausgleichsleitung 3 ist offen, wodurch eine Verbindung eines abgeschlossenen Tankinneren 6 zu Atmosphäre 7 hergestellt wird.

Durch die dünne, wassergefüllte und sich über den Tank 2 hinaus erstreckende Ausgleichsleitung 3 wird der statische Druck im Tank 2 erhöht. Die Höhe der Ausgleichsleitung 3 bestimmt den maximal einstellbaren Überdruck im oberen Bereich 14 des Tanks 2 und damit die maximale Belade-Temperatur, beispielsweise 135 °C. Die Ausgleichsleitung 3 wird vorzugsweise durch den Tank 2 nach unten verlängert und ist mit dem unteren, kälteren Bereich 8 des Tanks 2 verbunden.

Im Betrieb wird die Ausgleichsleitung 3 permanent mit im Vergleich zur maximalen Belade-Temperatur kaltem (beispielsweise 60 °C) Wasser gespeist (bzw. überspeist) und damit gefüllt gehalten. Das überschüssige Wasser fließt am offenen Ende 5 aus der Ausgleichleitung 3 und fällt in einen untenliegenden atmosphärisch offenen Sammelbehälter 10, von wo aus es über eine Leitung 11, in die eine Pumpe 12 geschaltet ist, wieder in den Tank 2 zurückgepumpt wird.

Durch das permanente Befüllen / Überspeisen der Ausgleichsleitung 3 werden unterschiedliche Lade- / Entlademassenströme sowie thermische Ausdehnvorgänge am Wärmespeicher ausgeglichen.

Damit die Wärmeübertragung im Tank 2 vom heißen auf das kalte Medium möglichst gering ist, ist der sich in den Tank 2 erstreckende Teil 9 der Ausgleichsleitung 3 zumindest teilweise thermisch isoliert.

Im Ausführungsbeispiel weist der Tank 2 einen im unteren Bereich 8 angeordneten Anschluss 13 zum Fernwärmerücklauf und im oberen Bereich 14 angeordneten Anschluss 15 zum Fernwärmevorlauf auf. Über diese Anschlüsse 13, 15 kann auch der Wärmespeicher 1 be- und entladen werden.

## Patentansprüche

1. Verfahren zum Speichern und Bereitstellen von bei der Stromerzeugung anfallender Wärmeenergie mittels Wasser, wobei das Wasser in einem Fernheiznetz verwendet wird und in einem Tank (2) eines Wärmespeichers (1) gespeichert wird, wobei ein Betriebsdruck in einem heißesten Teil des Wärmespeichers (1) oberhalb eines Sättigungsdrucks des Fluids entsprechend einer maximal möglichen Fernwärme-Vorlauftemperatur zu liegen kommt, **dadurch gekennzeichnet, dass** der statische Druck im Tank (2) durch eine vom Tank (2) abgehende und über diesen sich erstreckende Ausgleichsleitung (3) erhöht wird, wobei die Ausgleichsleitung (3) sich in den Tank (2) hinein erstreckt und wobei mit einem dem tankseitigen Ende (4) entgegengesetzten offenen Ende (5) der Ausgleichsleitung (3) eine Verbindung des Tankinneren (6) zu Atmosphäre (7) hergestellt wird und das Wasser unterhalb eines oberen Bereichs (14) des Tanks (2) in die Ausgleichsleitung (3) gelangt.

2. Verfahren nach Anspruch 1, wobei die Ausgleichsleitung (3) gefüllt gehalten wird.

## Claims

1. Method for storing and providing heat energy, which occurs during the generation of electricity, by means of water, wherein the water is used in a district heating grid and is stored in a tank (2) of a heat accumulator (1), wherein an operating pressure in the hottest part of a heat accumulator (1) comes to lie above a saturation pressure of the fluid corresponding to a maximum possible district heat supply temperature, **characterized in that** the static pressure in the tank (2) is increased by a compensation line (3) which starts from the tank (2) and extends above the latter, wherein the compensation line (3) extends into the tank (2), and wherein a connection of the tank interior (6) to the atmosphere (7) is established with an open end (5), opposite the tank-side end (4), of the compensation line (3), and the water below an upper region (14) of the tank (2) passes into the compensation line (3) .

2. Method according to Claim 1, wherein the compensation line (3) is kept filled.

## Revendications

1. Procédé de mémorisation et de mise à disposition, au moyen d'eau, d'énergie calorifique se produisant lors de la production de courant électrique, dans lequel on utilise l'eau dans un réseau de chauffage urbain et on l'accumule dans une cuve (2) d'un accumulateur (1) de chaleur, une pression de fonctionnement, dans une partie la plus chaude de l'accumulateur (1) de chaleur, étant supérieure à une pression de saturation du fluide, conformément à une température d'admission possible maximum du chauffage urbain, **caractérisé en ce que** l'on élève la pression statique dans la cuve (2) par un conduit (3) de compensation, partant la cuve (2) et s'y étendant, le conduit (3) de compensation s'étendant à l'intérieur de la cuve (2) et dans lequel il est ménagé, par une extrémité (5) ouverte, opposée à l'extrémité (4) du côté de la cuve, du conduit (3) de compensation, une liaison de l'intérieur (6) de la cuve avec l'atmosphère (7) et l'eau arrive dans le conduit (3) de compensation en dessous d'une partie (14) supérieure de la cuve (2).

2. Procédé suivant la revendication 1, dans lequel on maintient rempli le conduit (3) de compensation.
